# EUROPEAN PATENT SPECIFICATION

(11) **EP 3 012 291 B1**
(45) Date of publication and mention of the grant of the patent: **29.08.2018**
(21) Application number: 14820331.8
(22) Date of filing: 12.06.2014
(51) Int. Cl.: C08L 21/00, B60C 1/00, B60C 9/00, B60C 9/08, B60C 9/20, B60C 11/00, C08K 5/10, C08K 5/18, C08L 91/06, C08K 5/20, C08K 5/09

(54) **PNEUMATIC TIRE**
LUFTREIFEN
PNEUMATIQUE

(30) Priority: 05.07.2013 JP 2013141964
(43) Date of publication of application: 27.04.2016
(73) Proprietor: Sumitomo Rubber Industries, Ltd., Kobe-shi, Hyogo 651-0072 (JP)
(72) Inventor: MIYAZAKI Tatsuya, Kobe-shi Hyogo 651-0072 (JP); TOKIMUNE Ryuichi, Kobe-shi Hyogo 651-0072 (JP)
(74) Representative: Manitz Finsterwald Patentanwälte PartmbB
(86) International application number: PCT/JP2014/065584
(87) International publication number: WO 2015/001937

(56) References cited:
- EP-A1- 2 151 476
- EP-A1- 2 995 644
- EP-A1- 3 000 844
- EP-A1- 3 012 290
- JP-A- S5 757 733
- JP-A- H04 272 944
- JP-A- S63 213 536
- JP-A- 2007 182 100
- JP-A- 2008 308 518
- JP-A- 2011 140 612
- JP-A- 2012 036 351
- JP-A- 2012 057 153
- JP-A- 2013 071 977
- US-A1- 2013 102 714
- US-B1- 6 598 632
- DATABASE WPI Week 199335 Thomson Scientific, London, GB; AN 1993-278388 XP002765272, -& JP H05 194790 A (OHTSU TIRE & RUBBER CO LTD) 3 August 1993 (1993-08-03)
- DATABASE WPI Week 201374 Thomson Scientific, London, GB; AN 2013-T81066 XP002765273, -& JP 2013 227385 A (SUMITOMO RUBBER IND CO LTD) 7 November 2013 (2013-11-07)
- Wei Luan and Michael Woodman, Agilent Technologies Inc.: "Fast Analysis Method for Rubber Chemical Antidegradents Using 1200 Rapid Resolution Liquid Chromatography (RRLC) Systems with Rapid Resolution High Throughput (RRHT) Columns.", Agilent Technologies Inc. , 2007, XP002765300, Retrieved from the Internet: URL:http://cn.agilent.com/cs/library/appli cations/5989-6011EN.pdf [retrieved on 2016-12-16]

## Description

### TECHNICAL FIELD

The present invention relates to a pneumatic tire.

### BACKGROUND ART

Since automobile tires are manufactured using rubber compositions made from natural rubber and/or synthetic diene rubbers, degradation of such tires is accelerated at high ozone concentrations or under ultraviolet rays during service of the tires, which may cause cracking, for example, tread groove cracking (TGC) at the base of the main grooves of the tread. In order to suppress crack formation and growth in the presence of ozone, for example, additives such as antioxidants, e.g., N-(1,3-dimethylbutyl)-N'-phenyl-p-phenylenediamine (6PPD) or poly(2,2,4-trimethyl-1,2-)dihydroquinoline (TMDQ), or petroleum wax are used in rubber compositions.

The antioxidants and petroleum wax in rubber vulcanizates migrate (bloom) to the rubber surface of, for example, tires during vulcanization or service, thereby serving to protect the rubbers from ozone. However, if the antioxidants and petroleum wax are excessively added beyond the solubility of the rubber, they excessively bloom during the initial service period, causing white discoloration. Moreover, the antioxidants oxidized by ozone cause brown discoloration, and similar excessive blooming of them intensifies brown discoloration. Furthermore, if the wax and the like bloomed on the tire surface form an uneven bloom layer (surface-protecting layer), diffuse reflection of light occurs, making the brown discoloration caused by the degraded antioxidants more noticeable. Thus, it has been difficult to suppress crack formation while preventing discoloration.

With the recent increased demand for lighter weight tires, the sub-tread thickness at the base of the tread main grooves is being reduced to reduce tire weight. Unfortunately, however, the lighter tires are more likely to suffer from TGC during storage at tire dealers, stores, or the like.

As described above, TGC occurs during tire service (hereinafter also referred to as TGC during service) or during tire storage (hereinafter also referred to as TGC during storage). Usually, TGC during service is caused by static strain and dynamic strain and often forms multiple cracks, while TGC during storage is predominantly caused by static strain and often forms a single crack growing deep.

TGC during storage is more likely to occur particularly when tires are stored in a state where the rubber at the base of the tread main grooves is strained such as, for example, when tires (10 to 15 tires) are stacked flat (horizontally) on each other or tires are forced into a narrow upright storage space; or when they are stored in a high ozone environment such as, for example, in a dry season, around an ozone deodorizer or electric sparks produced by a rotating motor, or the like. Presumably, as the sub-tread thickness at the base of the tread main grooves is reduced, the rubber at the base of the tread main grooves is more likely to be strained and therefore TGC is more likely to occur during storage.

Moreover, in pneumatic tires after about two months from production, wax and the like bloom to form a film on the tire tread surface. Such a film tends to reduce initial wet-grip performance. Thus, there is another problem in that stored tires can have reduced initial wet-grip performance.

Patent Literature 1 describes that the addition of a polyoxyethylene ether nonionic surfactant prevents deterioration of the appearance of tires. This technique still leaves room for improvement in terms of preventing discoloration while improving initial wet-grip performance and TGC resistance during storage even after the tire having a reduced sub-tread thickness at the base of the tread main groove is stored.

US 2013/0102714 A1 discloses a rubber composition comprising a synthetic diene rubber, carbon black, silane and at least one amphophilic compound, wherein the rubber composition is suitable among others for a tire tread. For instance, the rubber composition may include 2 phr of amphophilic compound Struktol AW 1, a phenylenediamine antioxidant and antiozonant wax.

EP 2 151 476 A1 discloses surfactants, such as non-ionic surfactants.

US 6, 598, 632 B1 discloses a tire including sidewalls made of a vulcanized rubber composition, which comprises at least one polymer comprising an oxy group, which may be a non-ionic surfactant.

JP 2012-057, 153 A and JP 2012-036, 351 A describe that the addition of a certain nonionic surfactant to a rubber composition can prevent discoloration caused by antioxidants or wax, without deteriorating the ozone resistance.

### CITATION LIST

### PATENT LITERATURE

Patent Literature 1: JP H05-194790 A

### SUMMARY OF INVENTION

### TECHNICAL PROBLEM

The present invention aims to solve the above problems and provide a pneumatic tire capable of exhibiting good initial wet-grip performance while preventing discoloration and TGC during storage even after the tire having a reduced sub-tread thickness at the base of the tread main groove is stored.

### SOLUTION TO PROBLEM

The present invention relates to a pneumatic tire, including a tread, the tread being formed from a rubber composition for treads, the rubber composition for treads containing, per 100 parts by mass of a rubber component, 1.0 to 8.0 parts by mass of a phenylenediamine antioxidant, 0.5 to 4.0 parts by mass of a petroleum-derived wax, and 0.1 to 5.0 parts by mass of a nonionic surfactant, the pneumatic tire having a sub-tread thickness at the base of a tread main groove of 3.0 mm or less, wherein the sub-tread thickness is the thickness in the radial direction of the tire from the groove bottom surface of the base of the tread main groove to the surface of the band cords in the band in the case of the tire including a band or to the surface to the steel cords in the breaker in the case of the tire including no band.

Preferably, the nonionic surfactant is at least one selected from the group consisting of a Pluronic-type nonionic surfactant and at least one of nonionic surfactants represented by the following Formula (1) or Formula (2): 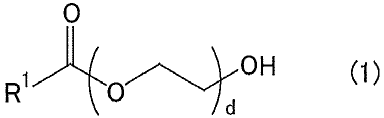 wherein R¹ represents a C6-C26 hydrocarbon group, and d represents an integer, 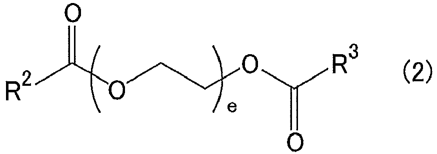 wherein R² and R³ are the same or different and each represent a C6-C26 hydrocarbon group, and e represents an integer.

In view of weight reduction and rolling resistance, the sub-tread thickness at the base of a tread main groove is preferably 2.0 mm or less.

The rubber composition for treads preferably contains, per 100 parts by mass of the rubber component, 2.5 to 8.0 parts by mass of at least one selected from the group consisting of stearic acid, metal salts of fatty acids, fatty acid amides, and amide esters.

In view of weight reduction and rolling resistance, the pneumatic tire is preferably provided with two steel breakers having a cord diameter of 1.0 mm or less.

The pneumatic tire is preferably provided with one carcass in a crown portion of the tire.

The pneumatic tire is preferably for passenger vehicles.

### ADVANTAGEOUS EFFECTS OF INVENTION

The pneumatic tire of the present invention includes a tread. The tread is formed from a rubber composition for treads. The rubber composition for treads contains, per 100 parts by mass of a rubber component, 1.0 to 8.0 parts by mass of a phenylenediamine antioxidant, 0.5 to 4.0 parts by mass of a petroleum-derived wax, and 0.1 to 5.0 parts by mass of a nonionic surfactant. Such a tire exhibits good initial wet-grip performance while preventing discoloration and TGC during storage even after the tire having a sub-tread thickness at the base of the tread main groove of as small as 3.0 mm or less is stored.

### DESCRIPTION OF EMBODIMENTS

The present invention relates to a pneumatic tire including a tread, the tread being formed from a rubber composition for treads, the rubber composition for treads containing, per 100 parts by mass of a rubber component, 1.0 to 8.0 parts by mass of a phenylenediamine antioxidant, 0.5 to 4.0 parts by mass of a petroleum-derived wax, and 0.1 to 5.0 parts by mass of a nonionic surfactant, the pneumatic tire having a sub-tread thickness at the base of the tread main groove of 3.0 mm or less. Such a pneumatic tire can exhibit excellent ozone resistance over a wide temperature range and good TGC resistance, especially during storage, and can also be sufficiently prevented from brown discoloration and white discoloration on the tread surface. Additionally, the pneumatic tire has good initial wet-grip performance. As described above, the pneumatic tire of the present invention exhibits good initial wet-grip performance while preventing discoloration and TGC during storage even after the tire having a reduced sub-tread thickness at the base of the tread main groove is stored, presumably for the following reasons.

The specific surfactant blooms to the tire surface together with wax and antioxidants and melts and flattens them, as a result of which white discoloration can be diminished and, at the same time, the irregularities of the surface-protecting layer formed on the tire surface are reduced so that brown discoloration, which is noticeable under diffuse reflection, can be greatly diminished. Further, a shiny black luster is imparted to the tire surface. In addition, when the specific surfactant is added, the film of wax and the like formed on the tire tread surface has a uniform thickness and flexibility and can be readily peeled off upon contact to the road surface, or in other words, the bloom film on the tread surface can be readily peeled off after a short break-in period. Thus, good initial wet-grip performance is obtained. On the other hand, the flat film at the base of the grooves where TGC can occur does not contact the road surface and cannot be readily peeled off and thus the bloom layer can be retained. Therefore, ozone resistance, i.e., TGC resistance, especially during storage, is improved.

The pneumatic tire of the present invention includes a tread and has a sub-tread thickness at the base of the tread main groove of 3.0 mm or less. The sub-tread thickness at the base of the tread main groove is preferably 2.5 mm or less, more preferably 2.0 mm or less. If the sub-tread thickness at the base of the tread main groove is more than 3.0 mm, the weight of the tire increases so that fuel economy is deteriorated. The sub-tread thickness at the base of the tread main groove is also preferably 0.3 mm or more, more preferably 0.5 mm or more, still more preferably 0.7 mm or more.

Since the pneumatic tire of the present invention includes a tread rubber of a specific composition, the tire can exhibit good initial wet-grip performance while preventing discoloration and TGC during storage even after the tire having a sub-tread thickness at the base of the tread main groove of as small as the above range is stored.

The base of the tread main groove as used herein refers to a groove for drainage formed in the tread in the circumferential direction of the tire, and corresponds to, for example, the first longitudinal main grooves 12 and the second longitudinal main grooves 13 in the tread pattern of the pneumatic tire illustrated in Fig. 1 of JP 2006-069305 A.

The sub-tread thickness at the base of the tread main groove as used herein refers to the thickness in the radial direction of the tire from the groove bottom surface of the base of the tread main groove to the surface of the band cords in the band in the case of the tire including a band, or to the surface of the steel cords in the breaker in the case of the tire including no band.

The pneumatic tire of the present invention is preferably provided with two steel breakers. Such a structure can suitably control the rolling strain of the tread portion and the pressure distribution of the ground-contacting surface, thereby more suitably suppressing TGC, especially during storage.

Herein, the expression "provided with two steel breakers" means that the tire is provided with two layers of rubberized fabric breakers formed from steel cords and a rubber coating the cords.

The steel cords in the breakers preferably have a cord diameter of 1.5 mm or less, more preferably 1.2 mm or less, still more preferably 1. 0 mm or less, particularly preferably 0.8 mm or less. The cord diameter is preferably 0.3 mm or more, more preferably 0.4 mm or more. When the cord diameter is within the above range, weight reduction, fuel economy, and resistance to compression deformation of the tread portion during tire storage (TGC resistance during storage) can be more suitably achieved at the same time.

The pneumatic tire of the present invention is preferably provided with one carcass in the crown portion of the tire. This is advantageous with respect to tire weight reduction and fuel economy as compared to two or three carcasses.

The crown portion of the tire herein refers to the central portion of the tread. The carcass in the crown portion of the tire herein refers to a carcass located on a line extending inwardly from the central portion of the tread in the radial direction of the tire (on the equatorial plane of the tire).

The carcass herein refers to a component formed from carcass cords and a carcass cord-topping rubber layer, and is also called case. Specifically, it is a component shown in, for example, Fig. 1 of JP 2008-75066 A, or the like.

The pneumatic tire of the present invention is preferably provided with one carcass in the crown portion of the tire and two steel breakers as described above. Such a pneumatic tire can be suitably used for passenger vehicles.

The tread in the pneumatic tire of the present invention is formed from a rubber composition for treads. The rubber composition for treads will be described below.

Examples of the rubber component usable in the rubber composition for treads include diene rubbers such as isoprene-based rubbers, styrene-butadiene rubber (SBR), polybutadiene rubber (BR), styrene-isoprene-butadiene rubber (SIBR), chloroprene rubber (CR), or acrylonitrile-butadiene rubber (NBR); and non-diene rubbers such as ethylene-propylene-diene rubber (EPDM), butyl rubber (IIR) or halogenated butyl rubber (X-IIR). Each of these may be used alone, or two or more of these may be used in combination. Among these, diene rubbers are preferred because they can be suitably used for treads. Further, among diene rubbers, isoprene-based rubbers and SBR are preferred, and combinations of SBR with isoprene-based rubbers are more preferred, because they provide good handling stability, good fuel economy, good elongation at break, good durability, and good wet-grip performance.

The amount of diene rubber based on 100% by mass of the rubber component is preferably 70% by mass or more, more preferably 80% by mass or more, still more preferably 90% by mass or more, and may be 100% by mass. The rubber composition containing the above amount of diene rubber can suitably enjoy the effects of the present invention and can also be suitably used as a rubber composition for treads.

Examples of isoprene-based rubbers include synthetic polyisoprene rubber (IR), natural rubber (NR), and modified natural rubber. Examples of NR include deproteinized natural rubber (DPNR) and high purity natural rubber (HPNR) . Examples of modified natural rubber include epoxidized natural rubber (ENR), hydrogenated natural rubber (HNR), and grafted natural rubber. Moreover, the NR may be one commonly used in the tire industry, for example, SIR20, RSS#3, TSR20, or the like. Among these, NR or IR is preferred, and NR is more preferred.

The amount of isoprene-based rubber may be 0% by mass. In the case of the rubber composition containing an isoprene-based rubber, the amount of isoprene-based rubber based on 100% by mass of the rubber component is preferably 20% by mass or more, more preferably 60% by mass or more. If the amount is less than 20% by mass, sufficient mechanical strength may not be obtained. The amount of isoprene-based rubber is preferably 80% by mass or less, more preferably 70% by mass or less. If the amount is more than 80% by mass, wet-grip performance may be reduced. If emphasis is placed on grip performance, the amount of isoprene-based rubber is preferably 20% by mass or less.

Any SBR may be used, and examples include emulsion-polymerized SBR (E-SBR), solution-polymerized SBR (S-SBR), and modified SBR having been modified with a primary amino group or the like.

The amount of SBR may be 0% by mass. In the case of the rubber composition containing SBR, the amount of SBR based on 100% by mass of the rubber component is preferably 30% by mass or more, more preferably 40% by mass or more. If the amount is less than 30% by mass, wet-grip performance or reversion resistance may be reduced. The amount of SBR is preferably 100% by mass or less, more preferably 80% by mass or less, still more preferably 75% by mass or less. If the amount is more than 80% by mass, sufficient abrasion resistance or performance on snow may not be obtained.

The combined amount of isoprene-based rubber and SBR may be 0% by mass. The combined amount of isoprene-based rubber and SBR based on 100% by mass of the rubber component is preferably 70% by mass or more, more preferably 80% by mass or more, and may be 100% by mass. In such case, good wet-grip performance, good handling stability, good fuel economy, good elongation at break, good abrasion resistance, good durability, and good crack growth resistance can be obtained.

In the present invention, the rubber composition for treads contains a nonionic surfactant.

The nonionic surfactant is not particularly limited, and examples include nonionic surfactants represented by Formula (1) and/or by Formula (2) below; Pluronic-type nonionic surfactants; sorbitan fatty acid esters such as polyoxyethylene sorbitan monostearate, polyoxyethylene sorbitan monooleate, polyoxyethylene sorbitan monopalmitate, polyoxyethylene sorbitan trioleate, polyoxyethylene sorbitan tristearate, or polyoxyethylene sorbitan tripalmitate; and polyoxyethylene alkyl ethers such as polyoxyethylene dodecyl ether, polyoxyethylene lauryl ether, polyoxyethylene 2-ethylhexyl ether, polyoxyethylene oleyl ether, ethylene glycol dibutyl ether, ethylene glycol dilauryl ether, ethylene glycol di-2-ethylhexyl ether, or ethylene glycol dioleyl ether. Each of these nonionic surfactants may be used alone, or two or more of these may be used in combination. In particular, the nonionic surfactant is preferably at least one selected from the group consisting of a Pluronic-type nonionic surfactant and a nonionic surfactant represented by Formula (1) below and/or nonionic surfactant represented by Formula (2) below, and more preferably a Pluronic-type nonionic surfactant, because the effects of the present invention can be more suitably achieved.

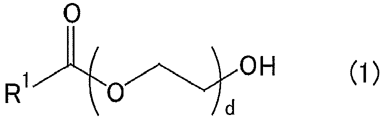

In Formula (1), R¹ represents a C6-C26 hydrocarbon group, and d represents an integer.

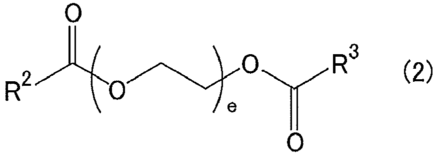

In Formula (2), R² and R³ are the same or different and each represent a C6-C26 hydrocarbon group, and e represents an integer.

First, the nonionic surfactants represented by Formula (1) and/or by Formula (2) will be described. Among these surfactants, the nonionic surfactant represented by Formula (1) is preferred because the effects of the present invention can be more suitably achieved.

R¹ in Formula (1) represents a C6-C26 hydrocarbon group. If R¹ is a hydrocarbon group having 5 or less carbon atoms, such a nonionic surfactant poorly permeates through rubber and migrates to the rubber surface too fast, as a result of which the rubber surface tends to have poor appearance. Also, if R¹ is a hydrocarbon group having 27 or more carbon atoms, such a material is difficult to obtain or expensive and is thus inappropriate. When R¹ is a hydrocarbon group having a carbon number within the above range, blooming of the nonionic surfactant can be suitably controlled and the effects of the present invention can be more suitably achieved.

R¹ is preferably a hydrocarbon group having 8 to 24 carbon atoms, more preferably 10 to 22 carbon atoms, still more preferably 14 to 20 carbon atoms.

Examples of the C6-C26 hydrocarbon group as R¹ include C6-C26 alkenyl groups, C6-C26 alkynyl groups, and C6-C26 alkyl groups.

Examples of the C6-C26 alkenyl groups include 1-hexenyl, 2-hexenyl, 1-octenyl, decenyl, undecenyl, dodecenyl, tridecenyl, tetradecenyl, pentadecenyl, heptadecenyl, octadecenyl, icosenyl, tricosenyl, and hexacosenyl groups.

Examples of the C6-C26 alkynyl groups include hexynyl, heptynyl, octynyl, nonynyl, decynyl, undecynyl, dodecynyl, tridecynyl, tetradecynyl, pentadecynyl, heptadecynyl, octadecynyl, icosynyl, tricosynyl, and hexacosynyl groups.

Examples of the C6-C26 alkyl groups include hexyl, heptyl, 2-ethylhexyl, octyl, nonyl, decyl, undecyl, dodecyl, tridecyl, tetradecyl, pentadecyl, octadecyl, heptadecyl, octadecyl, icosyl, tricosyl, and hexacosyl groups.

R¹ is preferably a C6-C26 alkenyl group or a C6-C26 alkynyl group, more preferably a C6-C26 alkenyl group.

A nonionic surfactant with a greater d (integer) has a higher value of HLB, which shows hydrophile-lipophile balance, and tends to migrate faster to the rubber surface. In the present invention, the d value is not particularly limited, and may be appropriately chosen according to the service conditions, purpose, or the like. In particular, the d value is preferably 2 to 25, more preferably 4 to 20, still more preferably 8 to 16, particularly preferably 10 to 14.

Examples of the nonionic surfactant represented by Formula (1) include ethylene glycol monooleate, ethylene glycol monopalmeate, ethylene glycol monopalmitate, ethylene glycol monovaccenate, ethylene glycol monolinoleate, ethylene glycol monolinolenate, ethylene glycol monoarachidonate, ethylene glycol monostearate, ethylene glycol monocetylate, and ethylene glycol monolaurate. Each of these may be used alone, or two or more of these may be used in combination. In view of ready availability and cost, ethylene glycol monooleate, ethylene glycol monolaurate, ethylene glycol monostearate, and ethylene glycol monopalmitate are preferred among these.

R² and R³ in Formula (2) are the same or different and each represent a C6-C26 hydrocarbon group. If R² or R³ is a hydrocarbon group having 5 or less carbon atoms, such a nonionic surfactant poorly permeates through rubber and migrates to the rubber surface too fast, as a result of which the rubber surface tends to have poor appearance. If R² or R³ is a hydrocarbon group having 27 or more carbon atoms, such a material is difficult to obtain or expensive and is thus inappropriate. When R² and R³ are each a hydrocarbon group having a carbon number within the above range, blooming of the nonionic surfactant can be suitably controlled and the effects of the present invention can be more suitably achieved.

R² and R³ are each preferably a hydrocarbon group having 8 to 24 carbon atoms, more preferably 10 to 22 carbon atoms, still more preferably 14 to 20 carbon atoms.

Examples of the C6-C26 hydrocarbon group as R² or R³ include C6-C26 alkenyl groups, C6-C26 alkynyl groups, and C6-C26 alkyl groups.

Examples of the C6-C26 alkenyl groups, C6-C26 alkynyl groups, and C6-C26 alkyl groups include those groups mentioned for R¹ above.

R² and R³ are each preferably a C6-C26 alkenyl group or a C6-C26 alkynyl group, more preferably a C6-C26 alkenyl group.

A nonionic surfactant with a greater e (integer) has a higher value of HLB, which shows hydrophile-lipophile balance, and tends to migrate faster to the rubber surface. In the present invention, the e value is not particularly limited, and may be appropriately chosen according to the service conditions, purpose, or the like. In particular, the e value is preferably 2 to 25, more preferably 4 to 20, still more preferably 8 to 16, particularly preferably 10 to 14.

Examples of the nonionic surfactant represented by Formula (2) include ethylene glycol dioleate, ethylene glycol dipalmeate, ethylene glycol dipalmitate, ethylene glycol divaccenate, ethylene glycol dilinoleate, ethylene glycol dilinolenate, ethylene glycol diarachidonate, ethylene glycol distearate, ethylene glycol dicetylate, and ethylene glycol dilaurate. Each of these may be used alone, or two or more of these may be used in combination. In view of ready availability and cost, ethylene glycol dioleate, ethylene glycol dilaurate, ethylene glycol distearate, and ethylene glycol dipalmitate are preferred among these.

The Pluronic-type nonionic surfactant will be described below.

The Pluronic-type nonionic surfactant is also called polyoxyethylene polyoxypropylene glycol, polyoxyethylene polyoxypropylene block polymer, or polypropylene glycol ethylene oxide adduct, and is generally a nonionic surfactant represented by Formula (I) below. As shown in Formula (I), the Pluronic-type nonionic surfactant contains on both sides thereof a hydrophilic group having an ethylene oxide structure, and also contains a hydrophobic group having a propylene oxide structure between the hydrophilic groups.

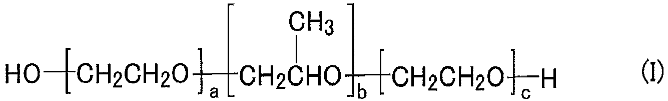

In Formula (I), a, b, and c each represent an integer.

The degree of polymerization of the polypropylene oxide block (b in Formula (I)) and the number of polyethylene oxide units added (a + c in Formula (I)) in the Pluronic-type nonionic surfactant are not particularly limited, and may be appropriately chosen according to the service conditions, purpose, or the like. A surfactant with a higher proportion of the polypropylene oxide block tends to have higher affinity for rubber and thus to migrate to the rubber surface at a slower rate. In particular, in order to suitably control blooming of the nonionic surfactant and more suitably achieve the effects of the present invention, the degree of polymerization of the polypropylene oxide block (b in Formula (I)) is preferably 100 or less, more preferably 10 to 70, still more preferably 10 to 60, particularly preferably 20 to 60, most preferably 20 to 45. For the same reason, the number of polyethylene oxide units added (a + c in Formula (I)) is preferably 100 or less, more preferably 3 to 65, still more preferably 5 to 55, particularly preferably 5 to 40, most preferably 10 to 40. When the degree of polymerization of the polypropylene oxide block and the number of polyethylene oxide units added are within the respective ranges described above, blooming of the nonionic surfactant can be suitably controlled and the effects of the present invention can be more suitably achieved.

Examples of the Pluronic-type nonionic surfactant include Pluronic series available from BASF Japan Ltd., Newpol PE series available from Sanyo Chemical Industries, Ltd., Adeka Pluronic L or F series available from Adeka Corporation, Epan series available from DKS Co. Ltd., and Pronon series or UNILUB available from NOF corporation. Each of these may be used alone, or two or more of these may be used in combination.

The amount of the nonionic surfactant (preferably, the combined amount of the nonionic surfactant represented by Formula (1), the nonionic surfactant represented by Formula (2), and the Pluronic-type nonionic surfactant) per 100 parts by mass of the rubber component is 0.1 parts by mass or more, preferably 0.3 parts by mass or more, more preferably 0.5 parts by mass or more, still more preferably 1 part by mass or more, particularly preferably 1.2 parts by mass or more. If the amount is less than 0.1 parts by mass, the effects of the present invention cannot be sufficiently obtained. Also, the combined amount is 5.0 parts by mass or less, preferably 4.0 parts by mass or less, more preferably 2.5 parts by mass or less, still more preferably 2.0 parts by mass or less. If the amount is more than 5.0 parts by mass, stickiness may be increased excessively and result in a sticky tire tread surface, and the bloom layer can be easily eluted away during running in the rain or in a test run on a wet road, which may rather result in deteriorated TGC resistance during service.

A phenylenediamine antioxidant is used in the rubber composition for treads in the present invention. The use of such a specific antioxidant together with the specific surfactant and a petroleum-derived wax can provide excellent ozone resistance over a wide temperature range and excellent TGC resistance, especially during service, and also sufficiently suppress discoloration. The antioxidant may be used alone or in combinations of two or more.

Examples of the phenylenediamine antioxidant include N-(1,3-dimethylbutyl)-N'-phenyl-p-phenylenediamine, N-(1,4-dimethylpentyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine. Preferred among these is N-(1,3-dimethylbutyl)-N'-phenyl-p-phenylenediamine.

A quinone antioxidant may be used together with the phenylenediamine antioxidant. Examples of the quinone antioxidant include benzoquinone antioxidants, hydroquinone antioxidants, catechol antioxidants, quinonediimine antioxidants, quinomethane antioxidants, and quinodimethane antioxidants. Preferred among these are quinonediimine antioxidants.

Examples of the quinonediimine antioxidants include N-isopropyl-N'-phenyl-p-quinonediimine, N-(1,3-dimethylbutyl)-N'-phenylquinonediimine, N,N'-diphenyl-p-quinonediimine, N-cyclohexyl-N'-phenyl-p-quinonediimine, N-n-hexyl-N'-phenyl-p-quinonediimine, and N,N'-dioctyl-p-quinonediimine. Preferred among these is N-(1,3-dimethylbutyl)-N'-phenylquinonediimine (6QDI).

The amount of phenylenediamine antioxidant per 100 parts by mass of the rubber component is 1.0 part by mass or more, preferably 1.5 parts by mass or more, more preferably 1.8 parts by mass or more. If the amount is less than 1.0 part by mass, sufficient ozone resistance and therefore sufficient TGC resistance, especially during service, are not obtained. Also, the amount of phenylenediamine antioxidant is 8.0 parts by mass or less, preferably 7.0 parts by mass or less, more preferably 6.0 parts by mass or less. If the amount is more than 8.0 parts by mass, discoloration (brown discoloration) occurs although good TGC resistance, especially during service, is obtained. Additionally, fuel economy may be deteriorated.

A petroleum-derived wax is used in the rubber composition for treads in the present invention. The petroleum-derived wax may be any of waxes derived from petroleum resources, including, for example, paraffin wax and microcrystalline wax. In particular, for excellent ozone resistance over a wide temperature range, the petroleum-derived wax preferably contains C20 to C32 normal alkanes. The petroleum-derived wax may be used alone or in combinations of two or more.

The petroleum-derived wax containing C20 to C32 normal alkanes is not particularly limited, and may be, for example, a petroleum-derived wax containing a predetermined amount of C20 to C55 normal alkanes. In particular, for excellent ozone resistance, the petroleum-derived wax may suitably be a wax having a normal alkane content of 70% by mass or more, more suitably 80% by mass or more.

The combined amount of C20 to C32 normal alkanes based on 100% by mass of the petroleum-derived wax is preferably 25% by mass or more, more preferably 35% by mass or more. If the combined amount is less than 25% by mass, sufficient ozone resistance may not be obtained at a temperature range of 20°C or lower . The combined amount is preferably 90% by mass or less, more preferably 50% by mass or less. If the combined amount is more than 90% by mass, discoloration resistance may be reduced.

The combined amount of C33 to C44 normal alkanes based on 100% by mass of the petroleum-derived wax is preferably 25% by mass or more, more preferably 35% by mass or more. If the combined amount is less than 25% by mass, sufficient ozone resistance may not be obtained at a temperature range from about 40°C to about 50°C. The combined amount is preferably 90% by mass or less, more preferably 50% by mass or less. If the combined amount is more than 90% by mass, a large amount of C33 to C44 normal alkanes tend to bloom at a temperature range from about 40°C to about 50°C, causing white discoloration.

The combined amount of C45 to C47 normal alkanes based on 100% by mass of the petroleum-derived wax is preferably 0.5% by mass or more, more preferably 2% by mass or more. If the combined amount is less than 0.5% by mass, crack resistance may be slightly deteriorated at a temperature range of about 60°C. The combined amount is preferably 10% by mass or less, more preferably 5% by mass or less. If the combined amount is more than 10% by mass, resistance to discoloration (white discoloration) tends to be deteriorated at a temperature range of about 60°C.

The combined amount of C48 and higher normal alkanes based on 100% by mass of the petroleum-derived wax is preferably 10% by mass or less, more preferably 5% by mass or less. In such case, good resistance to discoloration (white discoloration) can be achieved at a temperature range of 60°C or higher.

The amount of petroleum-derived wax per 100 parts by mass of the rubber component is 0. 5 parts by mass or more, preferably 1.0 part by mass or more. If the amount is less than 0.5 parts by mass, sufficient ozone resistance and therefore sufficient TGC resistance are not obtained. Also, the amount of petroleum-derived wax is 4.0 parts by mass or less, preferably 3.5 parts by mass or less, more preferably 2.5 parts by mass or less. If the amount is more than 4.0 parts by mass, too large an amount of blooms is formed, which can easily cause discoloration (brown discoloration) and also reduce initial wet-grip performance.

The rubber composition for treads preferably contains carbon black. The addition of carbon black produces a reinforcing effect and an UV-blocking effect and therefore the effects of the present invention can be well achieved. Examples of usable carbon black include GPF, FEF, HAF, ISAF, and SAF.

The carbon black preferably has a nitrogen adsorption specific surface area (N₂SA) of 20 to 200 m²/g, more preferably 90 to 130 m²/g. If the N₂SA is less than 20 m²/g, durability or handling stability may be reduced. If the N₂SA is more than 200 m²/g, sufficient fuel economy or processability may not be obtained. Herein, the nitrogen adsorption specific surface area of carbon black can be determined in conformity with JIS K 6217-2:2001.

In the case of the rubber composition containing carbon black, the amount of carbon black per 100 parts by mass of the rubber component is preferably 2 to 120 parts by mass, more preferably 3 to 80 parts by mass, still more preferably 5 to 70 parts by mass. If the amount is less than 2 parts by mass, sufficient resistance to cracks caused by ultraviolet rays tends not to be obtained and ozone resistance tends to be deteriorated. If the amount is more than 120 parts by mass, fuel economy or chipping resistance (elongation at break) may be deteriorated.

The rubber composition for treads preferably contains silica. Any silica may be used, and examples include dry silica (anhydrous silica) and wet silica (hydrous silica) . Wet silica (hydrous silica) is preferred because it has many silanol groups.

In the case of the rubber composition containing silica, the amount of silica per 100 parts by mass of the rubber component is preferably 5 to 130 parts by mass, more preferably 10 to 120 parts by mass. If the amount is more than 130 parts by mass, fuel economy or chipping resistance (elongation at break) may be deteriorated.

In the rubber composition for treads, the combined amount of carbon black and silica is preferably 35 to 140 parts by mass, preferably 40 to 130 parts by mass, more preferably 50 to 120 parts by mass, per 100 parts by mass of the rubber component. If the combined amount is less than 35 parts by mass, abrasion resistance tends to be reduced. If the combined amount is more than 140 parts by mass, fuel economy or chipping resistance (elongation at break) tends to be deteriorated.

In the case of the rubber composition containing silica, the rubber composition preferably contains a silane coupling agent together with silica.

Any silane coupling agent conventionally used in combination with silica in the rubber industry may be used. Examples include sulfide silane coupling agents such as bis(3-triethoxysilylpropyl)disulfide; mercapto silane coupling agents such as 3-mercaptopropyltrimethoxysilane; vinyl silane coupling agents such as vinyltriethoxysilane; amino silane coupling agents such as 3-aminopropyltriethoxysilane; glycidoxy silane coupling agents such as γ-glycidoxypropyltriethoxysilane; nitro silane coupling agents such as 3-nitropropyltrimethoxysilane; and chloro silane coupling agents such as 3-chloropropyltrimethoxysilane. Sulfide silane coupling agents are preferred among these.

The rubber composition for treads may contain a softener. When a softener is added, processability and blooming of the above-mentioned antioxidant, nonionic surfactant, and petroleum-derived wax can be suitably controlled and the effects of the present invention can be better achieved.

Examples of the softener include oil, and resins such as C5 petroleum resin, C9 petroleum resin, coumarone indene resin, terpene phenol resin, indene resin, non-reactive alkylphenol resins, or aromatic vinyl polymers obtained by polymerizing α-methylstyrene and/or styrene. The softener may be appropriately selected depending on the migration rate of the wax or antioxidant, and the like. Among these, oil, coumarone indene resin, aromatic vinyl polymers, and terpene phenol resin are preferred because the effects of the present invention can be suitably achieved.

Examples of the oil include process oils, vegetable fats and oils, and mixtures of these. Examples of the process oils include paraffinic process oils, aromatic process oils, and naphthenic process oils. Specific examples of the paraffinic process oil include PW-32, PW-90, PW-150, and PS-32 available from Idemitsu Kosan Co. , Ltd. Specific examples of the aromatic process oil include AC-12, AC-460, AH-16, AH-24, and AH-58 available from Idemitsu Kosan Co., Ltd. Examples of the vegetable oils and fats include castor oil, cottonseed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. Each of these may be used alone, or two or more of these may be used in combination. Among these, aromatic process oils are preferred because the effects of the present invention can be suitably achieved.

In the case of the rubber composition containing a softener, the amount of softener per 100 parts by mass of the rubber component is preferably 1.0 part by mass or more, more preferably 2.0 parts by mass or more, still more preferably 3.0 parts by mass or more. Also, the amount of softener is preferably 50 parts by mass or less, more preferably 40 parts by mass or less, still more preferably 35 parts by mass or less. When the amount of softener, which itself blooms to the tire surface, is adjusted to the above range, blooming of the above-mentioned antioxidant, nonionic surfactant, and petroleum-derived wax can be suitably controlled and the effects of the present invention can be more suitably achieved.

In the present invention, stearic acid is preferably added. In the case of the rubber composition containing stearic acid, the amount of stearic acid per 100 parts by mass of the rubber component is preferably 0.5 to 10 parts by mass, more preferably 1.5 to 5 parts by mass.

In the present invention, a processing aid may be used together with stearic acid. In this case, the rubber during vulcanization can flow smoothly so that it is less likely to incorporate foreign substances attached to the mold, with the result that better TGC resistance, especially during storage, can be obtained.

The processing aid is not particularly limited, and examples include metal salts of fatty acids, fatty acid amides, amide esters, silica surface activators, fatty acid esters, mixtures of metal salts of fatty acids with amide esters, and mixtures of metal salts of fatty acids with fatty acid amides. Each of these may be used alone, or two or more of these may be used in combination. In particular, the processing aid is preferably at least one selected from the group consisting of metal salts of fatty acids, fatty acid amides, and amide esters, more preferably at least one selected from the group consisting of metal salts of fatty acids, amide esters, and mixtures of metal salts of fatty acids with amide esters or fatty acid amides.

The fatty acids of the metal salts of fatty acids are not particularly limited, and examples include saturated or unsaturated fatty acids (preferably C6-C28, more preferably C10-C25, still more preferably C14-C20, saturated or unsaturated fatty acids) such as, for example, lauric acid, myristic acid, palmitic acid, stearic acid, oleic acid, linoleic acid, linolenic acid, arachidic acid, behenic acid, nervonic acid, or the like. Each of these may be used alone, or two or more of these may be used in admixture. Among these, saturated fatty acids are preferred, and C14-C20 saturated fatty acids are more preferred.

Examples of the metals of the metal salts of fatty acids include alkali metals such as potassium or sodium, alkaline earth metals such as magnesium, calcium or barium, zinc, nickel, and molybdenum. Among these, zinc or calcium is preferred, and calcium is more preferred.

Examples of the amide esters include fatty acid amide esters formed of the above-mentioned saturated or unsaturated fatty acids.

The fatty acid amides include saturated or unsaturated fatty acid amides. Examples of saturated fatty acid amides include N-(1-oxooctadecyl)sarcosine, stearamide, and behenamide. Examples of unsaturated fatty acid amides include oleamide and erucamide.

Specific examples of the mixtures of metal salts of fatty acids with amide esters include Aflux 16, which is a mixture of calcium salts of fatty acids with amide esters, available from Rhein Chemie.

Specific examples of the mixtures of metal salts of fatty acids with fatty acid amides include WB16, which is a mixture of calcium salts of fatty acids with fatty acid amides, available from Struktol.

In the case of the rubber composition containing a processing aid, the amount of processing aid per 100 parts by mass of the rubber component is preferably 0.5 to 15 parts by mass, more preferably 1 to 10 parts by mass.

In the rubber composition, the amount of at least one selected from the group consisting of stearic acid, metal salts of fatty acids, fatty acid amides, and amide esters (preferably, the combined amount of these components) is preferably 1.5 to 10.0 parts by mass, more preferably 2.5 to 8.0 parts by mass, still more preferably 2.5 to 7.5 parts by mass, per 100 parts by mass of the rubber component. In such case, the rubber during vulcanization can flow smoothly so that it is less likely to incorporate foreign substances attached to the mold, with the result that better TGC resistance, especially during storage, can be obtained.

The rubber composition for treads may appropriately contain compounding agents commonly used in the manufacture of rubber compositions, such as zinc oxide, a vulcanizing agent, or a vulcanization accelerator, in addition to the above-mentioned components.

Sulfur is preferably used as a vulcanizing agent in the present invention. In this case, a moderate amount of crosslinks are formed between polymers, as a result of which blooming of the above-mentioned antioxidant, nonionic surfactant, and petroleum-derived wax can be suitably controlled and the effects of the present invention can be more suitably achieved. Examples of the sulfur include those commonly used in the rubber industry, such as powdered sulfur, precipitated sulfur, colloidal sulfur, insoluble sulfur, highly dispersible sulfur, and soluble sulfur. Each of these may be used alone, or two or more of these may be used in combination.

The amount of sulfur per 100 parts by mass of the rubber component is preferably 0.1 parts by mass or more, more preferably 0.5 parts by mass or more, still more preferably 0. 8 parts by mass or more. If the amount is less than 0.1 parts by mass, insufficient hardness (Hs) after vulcanization may be obtained and co-curing with neighboring rubber compounds may be insufficient. The amount of sulfur is preferably 4.0 parts by mass or less, more preferably 3.0 parts by mass or less, still more preferably 2.5 parts by mass or less, particularly preferably 2.0 parts by mass or less. If the amount is more than 4.0 parts by mass, abrasion resistance, crack growth resistance, elongation at break, or durability may be deteriorated.

The rubber composition for treads may be prepared by known methods, such as, for example, by kneading the aforementioned components using a rubber kneading machine such as an open roll mill or a Banbury mixer, and then vulcanizing the mixture.

The pneumatic tire of the present invention can be manufactured using the rubber composition by usual methods. Specifically, the rubber composition, before vulcanization, is extruded and processed into the shape of a tire component such as a tread and then assembled with other tire components in a conventional manner on a tire building machine to build an unvulcanized tire, which is then heated and pressurized in a vulcanizer to form a tire.

### EXAMPLES

The present invention is specifically described with reference to, but not limited to, examples.

The chemicals used in the examples and comparative examples are collectively listed below.
NR: TSR20
SBR: SBR1502 available from Zeon Corporation
Carbon black (N220): Shoblack N220 (N₂SA: 111 m²/g, DBP oil absorption: 115 mL/100 g) available from Cabot Japan K. K.
Silica: Ultrasil VN3 available from Evonik Degussa
Oil: Vivatec 500 (TDAE, low polycyclic aroma oil) available from H&R
Petroleum-derived wax: Trial product (normal alkane content: 85% by mass on average)
Antioxidant 6C: Antigene 6C (N-(1,3-dimethylbutyl)-N'-phenyl-p-phenylenediamine (6PPD)) available from Sumitomo Chemical Co., Ltd.
   <Surfactant 1>: NEWPOL PE-64 (Pluronic-type nonionic surfactant, copolymer of PEG/PPG (25/30), Formula (I) in which a + c is 25 and b is 30) available from Sanyo Chemical Industries, Ltd.
   <Surfactant 2>: NEWPOL PE-74 (Pluronic-type nonionic surfactant, copolymer of PEG/PPG (30/35), Formula (I) in which a + c is 30 and b is 35) available from Sanyo Chemical Industries, Ltd.
   <Surfactant 3>: Ionet DO600 (the principal ingredient is a compound represented by the formula below which corresponds to Formula (2) in which R² and R³ are each -C₁₇H₃₃ and e is 12) available from Sanyo Chemical Industries, Ltd.

      C₁₇H₃₃COO(CH₂CH₂O)₁₂COC₁₇H₃₃
   <Surfactant 4>: Ionet PO600 (the principal ingredient is a compound represented by the formula below which corresponds to Formula (1) in which R¹ is -C₁₇H₃₃ and d is 12) available from Sanyo Chemical Industries, Ltd.

      C₁₇H₃₃COO(CH₂CH₂O)₁₂H
   <Surfactant 5>: Polyoxyethylene sorbitan monostearate available from Kanto Chemical Co., Inc.
   <Surfactant 6>: Polyoxyethylene sorbitan trioleate available from Kanto Chemical Co., Inc.
   <Surfactant 7>: Polyoxyethylene dodecyl ether available from Kanto Chemical Co., Inc.
   <Surfactant 8>: Ethylene glycol dibutyl ether available from Tokyo Chemical Industry Co., Ltd.
Antioxidant TMQ: Nocrac 224 (2,2,4-trimethyl-1,2-dihydroquinoline polymer) available from Ouchi Shinko Chemical Industrial Co., Ltd.
Silane coupling agent: Si75 (bis(3-triethoxysilyl-propyl)disulfide) available from Evonik Degussa
5% Oil-containing sulfur powder: HK-200-5 available from Hosoi Chemical Industry Co., Ltd.
Vulcanization accelerator TBBS: Nocceler NS (N-tert-butyl-2-benzothiazolylsulfenamide) available from Ouchi Shinko Chemical Industrial Co., Ltd.
Zinc oxide: Ginrei R available from Toho Zinc Co., Ltd.
Stearic acid: Stearic acid "Tsubaki" available from NOF Corporation
   Processing aid 1: WB16 (a mixture of metal salts of fatty acids (calcium salts of fatty acids) with fatty acid amides) available from Struktol
   Processing aid 2: Aflux 37 (amide esters) available from Rhein Chemie

The carbon number distribution of the petroleum-derived wax was determined by the method described below. Table 4 shows the results.

The carbon number distribution was measured using a capillary GC analyzer and a capillary column coated with aluminum with helium carrier gas at a flow rate of 4 mL/min, a column temperature of 180°C to 390°C, and a rate of temperature rise of 15°C/min.

### (Examples and Comparative Examples)

The chemicals in formulation amounts shown in Table 1 or 2, except the sulfur and vulcanization accelerator, were kneaded in a 1. 7-L Banbury mixer available from Kobe Steel, Ltd. Then, the sulfur and vulcanization accelerator were added to the kneaded mixture and they were kneaded using an open roll mill to prepare an unvulcanized rubber composition. The unvulcanized rubber composition was formed into the shape of a tread and assembled with other tire components to build an unvulcanized tire, which was then vulcanized at 170°C to prepare a test tire (205/65R15, 8.7 kg). The specification of the test tire was as follows: the tread pattern included five main grooves; the sub-tread thickness at the base of the tread main groove and the number of carcasses were as shown in Table 1 or 2; the breaker (brk) specification was as shown in Tables 1 to 3; and the carcass cords used were high modulus polyester cords (1100d-tex/2, cord diameter: 0.54 mm, total thickness of rubberized fabric: 1.00 mm) available from Toray. The test tires thus prepared were evaluated for performance by the following tests.

### <Simulation of TGC during storage>

Twelve test tires were stacked flat (horizontally) on each other in a warehouse in Osaka and stored for three months. Since cracking due to ozone can readily occur at the base of the main grooves of the bottom tire depending on the total weight of the tires stacked thereon (practically, a load of 11 × 8.7 kg tires was applied from the tires thereon), the degree of TGC in the main grooves of the lowermost tire, which was most deformed, was observed after three-month storage and expressed as an index, with the result of Comparative Example 1 equal to 100. A higher index indicates higher TGC resistance during storage, which means better suppression of TGC during storage. The target index was 105 or higher.

### <Discoloration test>

### Outdoors: Evaluation of brown discoloration

The tires were left outside for 6 months (from winter to summer) at Kobe city while they were protected from rain under a semi-transparent roof. Then, a* and b* of the tread portion were measured using a colorimeter, and the sum of the a* and b* values was expressed as an index, with the result of Comparative Example 1 equal to 100. A higher index indicates a lower degree of brown discoloration. The target index was 105 or higher.

### <Initial wet-grip performance>

The lowermost tire of the horizontally stacked twelve tires obtained after three-month storage in a warehouse in Osaka in the simulation of TGC during storage was mounted on a domestic car, and then subjectively evaluated for initial wet-grip performance on a wet road. The evaluation was made on a road circuit after a 10-km break-in. The results are expressed as an index, with the result of Comparative Example 1 equal to 100. A higher index indicates better initial wet-grip performance. The target index was 105 or higher.

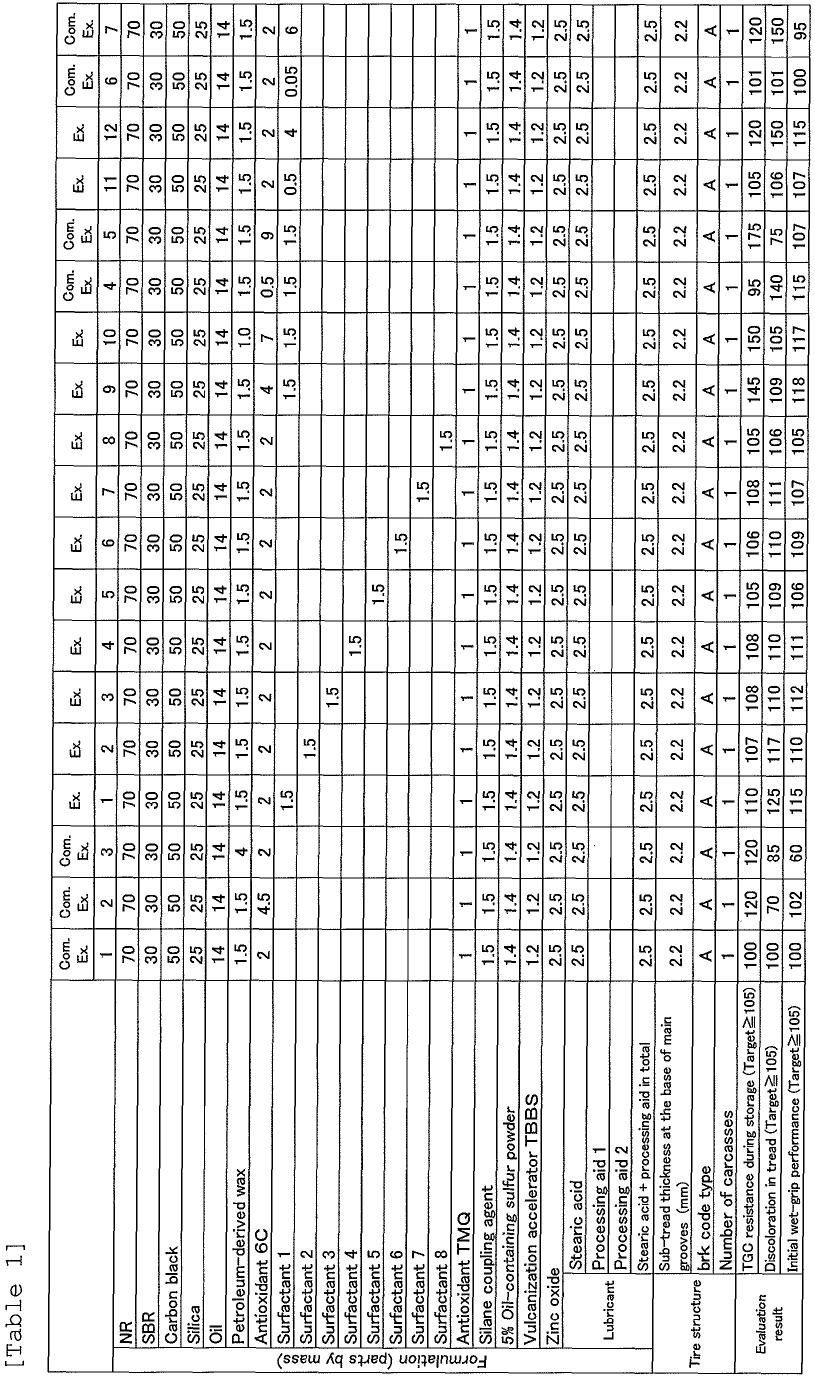

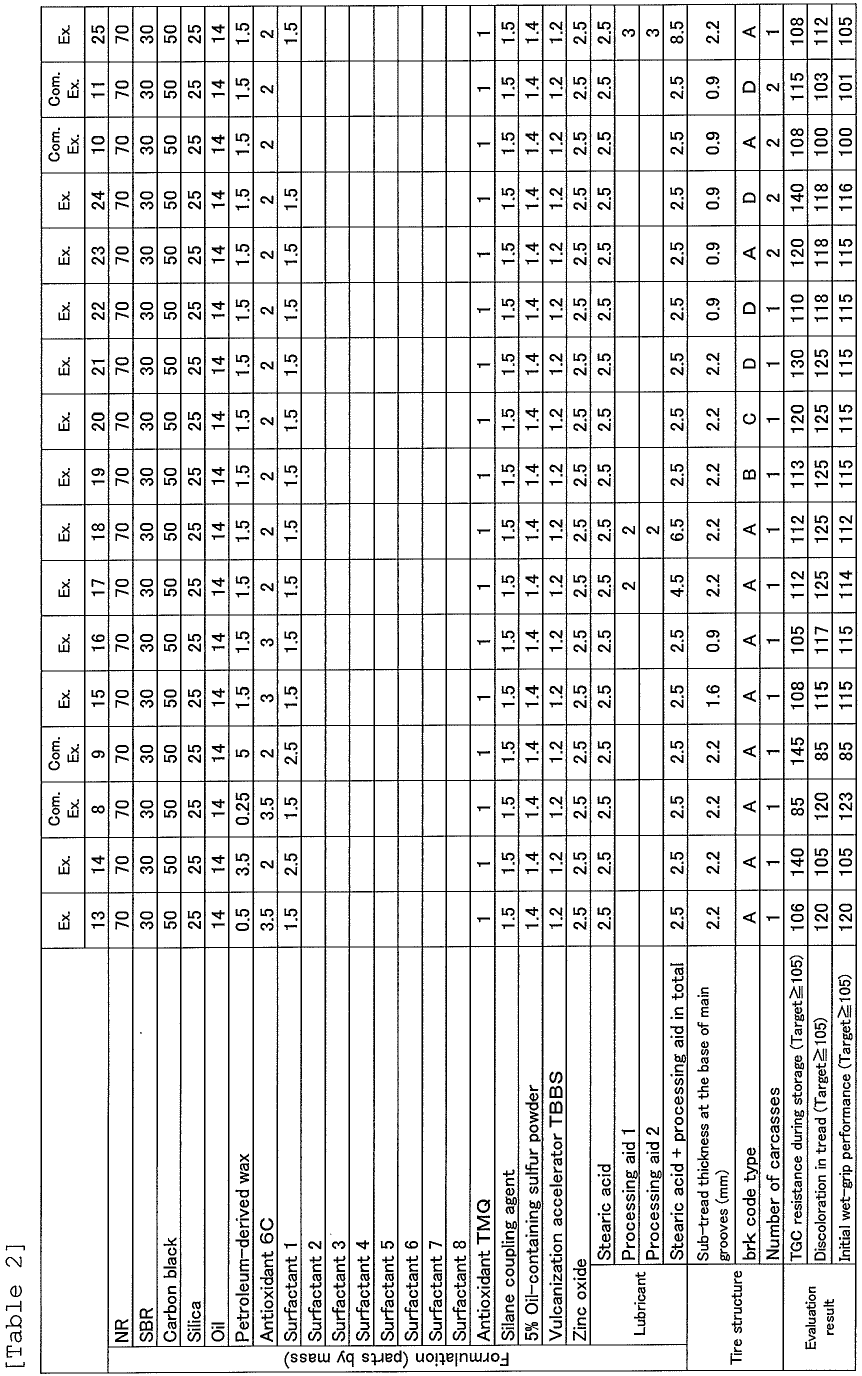

**[Table 3]**

| | Code type, Code diameter (mm) | Thickness of rubberized fabric (mm) | Endcount/25cm |
|---|---|---|---|
| brk code available from Sumitomo Electric Industries | A: 2+2/.23HT 0.59mm | 1.250 | 38 |
| | B: 2+1/.25HT 0.63mm | 1.250 | 38 |
| | C: 3/.175+6/.32 1.04mm | 1.600 | 26 |
| | D: 1*5/.38HT 1.15mm | 1.800 | 26 |

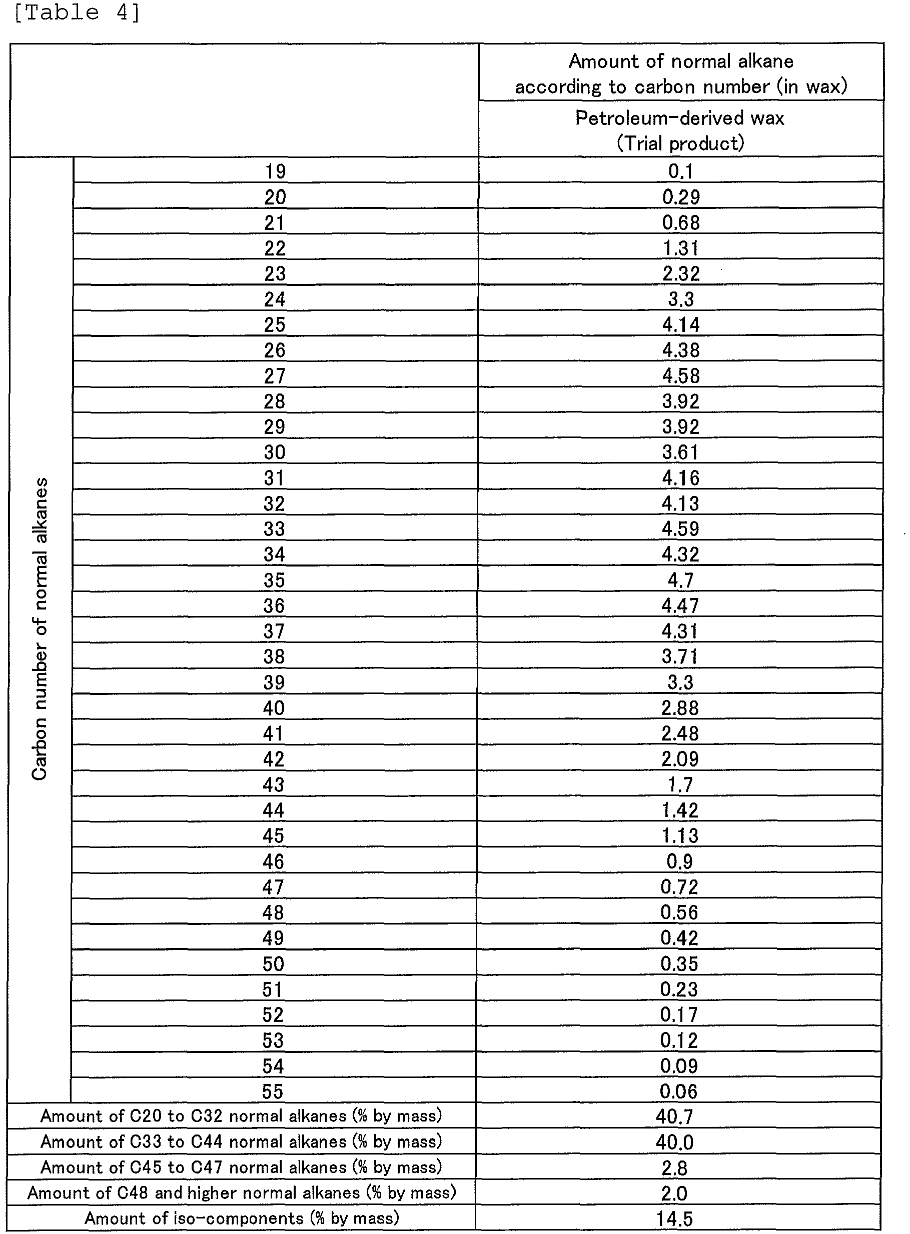

The pneumatic tires of the examples included a tread formed from a rubber composition for treads, the rubber composition for treads containing, per 100 parts by mass of a rubber component, 1.0 to 8.0 parts by mass of a phenylenediamine antioxidant, 0.5 to 4.0 parts by mass of a petroleum-derived wax, and 0.1 to 5.0 parts by mass of a nonionic surfactant. Although the pneumatic tires of the examples had a sub-tread thickness at the base of the tread main groove of as small as 3.0 mm or less, they exhibited good initial wet-grip performance while preventing discoloration and TGC during storage even after the tires were stored.

## Claims

1. A pneumatic tire, comprising a tread,
the tread being formed from a rubber composition for treads,
the rubber composition for treads comprising, per 100 parts by mass of a rubber component, 1.0 to 8.0 parts by mass of a phenylenediamine antioxidant, 0.5 to 4.0 parts by mass of a petroleum-derived wax, and 0.1 to 5.0 parts by mass of a nonionic surfactant,
the pneumatic tire having a sub-tread thickness at the base of a tread main groove of 3.0 mm or less
the sub-tread thickness is the thickness in the radial direction of the tire from the groove bottom surface of the base of the tread main groove to the surface of the band cords in the band in the case of the tire including a band or to the surface to the steel cords in the breaker in the case of the tire including no band.

2. The pneumatic tire according to claim 1,
wherein the nonionic surfactant is at least one selected from the group consisting of a Pluronic-type nonionic surfactant and at least one of nonionic surfactants represented by the following Formula (1) or Formula (2): 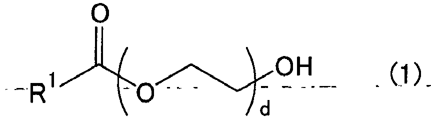 wherein R¹ represents a C6-C26 hydrocarbon group, and d represents an integer, 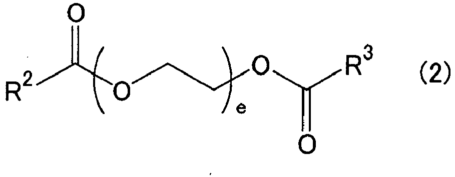 wherein R² and R³ are the same or different and each represent a C6-C26 hydrocarbon group, and e represents an integer.

3. The pneumatic tire according to claim 1 or 2,
wherein the sub-tread thickness at the base of a tread main groove is 2.0 mm or less.

4. The pneumatic tire according to any one of claims 1 to 3,
wherein the rubber composition for treads comprises, per 100 parts by mass of the rubber component, 2.5 to 8.0 parts by mass of at least one selected from the group consisting of stearic acid, metal salts of fatty acids, fatty acid amides, and amide esters.

5. The pneumatic tire according to any one of claims 1 to 4,
wherein the pneumatic tire is provided with two steel breakers having a cord diameter of 1.0 mm or less.

6. The pneumatic tire according to any one of claims 1 to 5,
wherein the pneumatic tire is provided with one carcass in a crown portion of the tire.

7. The pneumatic tire according to any one of claims .1 to 6, which is for passenger vehicles.

## Patentansprüche

1. Luftreifen, der eine Lauffläche umfasst,
wobei die Lauffläche aus einer Kautschukzusammensetzung für Laufflächen gebildet ist,
wobei die Kautschukzusammensetzung für Laufflächen bezogen auf 100 Masseteile einer Kautschukkomponente 1,0 bis 8,0 Masseteile eines Phenylendiaminantioxidationsmittels, 0,5 bis 4,0 Masseteile eines Wachses auf Erdölbasis und 0,1 bis 5,0 Masseteile eines nichtionischen Tensids umfasst,
wobei der Luftreifen eine Protektorunterteildicke an der Grundfläche der Laufflächenhauptrille von 3,0 mm oder weniger aufweist,
die Protektorunterteildicke die Dicke in der radialen Richtung des Reifens von der Rillengrundoberfläche der Grundfläche der Laufflächenhauptrille zu der Oberfläche der Bandkorde in dem Band in dem Fall ist, dass der Reifen ein Band umfasst, oder zu der Oberfläche der Stahlkorde in dem Breaker in dem Fall ist, dass der Reifen kein Band umfasst.

2. Luftreifen nach Anspruch 1, wobei das nichtionische Tensid zumindest eines ist, ausgewählt aus der Gruppe, bestehend aus einem nichtionischen Tensid vom Pluronic-Typ und zumindest einem von nichtionischen Tensiden, die durch die folgende Formel (1) oder Formel (2) dargestellt sind: 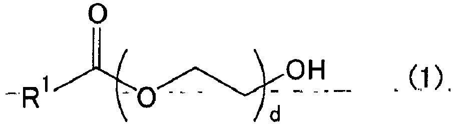 wobei R¹ für eine C6-C26-Kohlenwasserstoffgruppe steht und d für eine ganze Zahl steht, 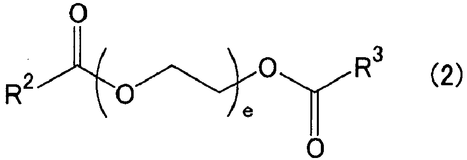 wobei R² und R³ gleich oder verschieden sind und jeweils für eine C6-C26-Kohlenwasserstoffgruppe stehen und e für eine ganze Zahl steht.

3. Luftreifen nach Anspruch 1 oder 2, wobei die Protektorunterteildicke an der Grundfläche einer Laufflächenhauptrille 2,0 mm oder weniger beträgt.

4. Luftreifen nach einem der Ansprüche 1 bis 3, wobei die Kautschukzusammensetzung für Laufflächen bezogen auf 100 Masseteile der Kautschukkomponente 2,5 bis 8,0 Masseteile von zumindest einem umfasst, ausgewählt aus der Gruppe, bestehend aus Stearinsäure, Metallsalzen von Fettsäuren, Fettsäureamiden und Amidestern.

5. Luftreifen nach einem der Ansprüche 1 bis 4, wobei der Luftreifen mit zwei Stahlbreakern versehen ist, die einen Korddurchmesser von 1,0 mm oder weniger aufweisen.

6. Luftreifen nach einem der Ansprüche 1 bis 5, wobei der Luftreifen in einem Kronenabschnitt des Reifens mit einer Karkasse versehen ist.

7. Luftreifen nach einem der Ansprüche 1 bis 6, der für Pkw vorgesehen ist.

## Revendications

1. Bandage pneumatique, comprenant une bande de roulement,
la bande de roulement étant formée d'une composition de caoutchouc pour bande de roulement,
la composition de caoutchouc pour bande de roulement comprenant, pour 100 parties en masse d'un composant en caoutchouc, 1,0 à 8,0 parties en masse d'un antioxydant phénylènediamine, 0,5 à 4,0 parties en masse d'une cire dérivée du pétrole, et 0,1 à 5,0 parties en masse d'un surfactant non ionique,
le bandage pneumatique ayant une épaisseur sous-jacente à la bande de roulement au niveau de la base d'une rainure principale de la bande de roulement égale à 3,0 mm ou moins
l'épaisseur sous-jacente à la bande de roulement est l'épaisseur dans la direction radiale du pneumatique depuis la surface de fond de rainure à la base de la rainure principale de roulement jusqu'à la surface des câblés de la bande dans le cas où le pneumatique inclut une bande ou jusqu'à la surface des câblés d'acier dans l'armature de sommet dans le cas où le pneumatique n'inclut pas de bande.

2. Bandage pneumatique selon la revendication 1,
dans lequel le surfactant non ionique est au moins un surfactant sélectionné parmi le groupe comprenant un surfactant non ionique de type "Pluronic" et au moins un des surfactants non ioniques représentés par la formule (1) ou la formule (2) suivantes : 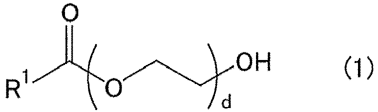 dans laquelle R¹ représente un groupe hydrocarbure en C6-C26, et d représente un entier, 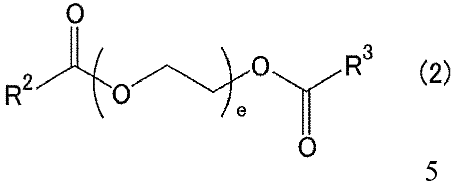 dans laquelle R² et R³ sont les mêmes ou sont différents et chacun représente un groupe hydrocarbure en C6-C26, et e représente un entier.

3. Bandage pneumatique selon la revendication 1 ou 2,
dans lequel l'épaisseur sous-jacente à la bande de roulement à la base d'une rainure principale de la bande de roulement est de 2,0 mm ou moins.

4. Bandage pneumatique selon l'une quelconque des revendications 1 à 3, dans lequel la composition de caoutchouc pour bande de roulement comprend, pour 100 parties en masse du composant de caoutchouc, 2,5 à 8,0 parties en masse d'au moins un composant sélectionné parmi le groupe constitué de : acide stéarique, sels métalliques d'acides gras, amides d'acides gras et esters amides.

5. Bandage pneumatique selon l'une quelconque des revendications 1 à 4, dans lequel le bandage pneumatique est doté de deux armatures de sommet ayant un diamètre de câblés de 1,0 mm ou moins.

6. Bandage pneumatique selon l'une quelconque des revendications 1 à 5, dans lequel le bandage pneumatique est doté d'une carcasse dans une portion de couronne du pneumatique.

7. Bandage pneumatique selon l'une quelconque des revendications 1 à 6, qui est destiné à des véhicules pour passagers.
